# EUROPEAN PATENT SPECIFICATION

(11) **EP 2 780 595 B1**
(45) Date of publication and mention of the grant of the patent: **06.04.2016**
(21) Application number: 12809081.8
(22) Date of filing: 14.11.2012
(51) Int. Cl.: F04B 35/04, F04B 39/12, F04B 53/16, F16C 29/02, F25B 31/02, F16C 32/06

(54) **RESTRICTOR AND PRODUCTION PROCESS OF A FLUID LEAKAGE RESTRICTOR FOR AEROSTATIC BEARINGS**
DURCHFLUSSBEGRENZER UND HERSTELLUNGSVERFAHREN FÜR EINEN DURCHFLUSSBEGRENZER DER FLUIDLECKAGE FÜR AEROSTATISCHE LAGER
RESTRICTEUR ET PROCÉDÉ DE PRODUCTION D'UN RESTRICTEUR DE FUITE DE FLUIDE POUR PALIERS AÉROSTATIQUES

(30) Priority: 16.11.2011 BR PI1105471
(43) Date of publication of application: 24.09.2014
(73) Proprietor: Whirlpool S.A., 04578-000 São Paulo - SP (BR)
(72) Inventor: BRÜGGMANN MÜHLE, Henrique, Joinville-SC 89201-602 (BR); LILIE, Dietmar Erich Bernhard, Joinville-SC 89204-060 (BR)
(74) Representative: Burt, Matthew Thomas
(86) International application number: PCT/BR2012/000451
(87) International publication number: WO 2013/071385

(56) References cited:
- DE-A1-102004 061 940
- DE-A1-102006 009 268
- US-A- 5 564 063
- US-A- 5 645 354
- US-A1- 2010 098 356
- US-A1- 2010 247 308
- US-B1- 6 569 128

## Description

The present invention pertains to restrictors for aerostatic bearing of pistons in cylinders comprised by linear compressors for cooling.

### Description of the State of the Art

In general terms, the basic structure of a cooling circuit comprises four components, namely the compressor, the condenser, the expansion device and the evaporator. These elements characterize a cooling circuit in which a fluid circulates so as to allow the temperature of an internal environment to decrease, withdrawing the heat therefrom and displacing it to an external environment by way of the elements that make up the cooling circuit.

The fluid that circulates in the cooling circuit generally follows the passage sequence: compressor, condenser, expansion valve, evaporator and compressor again, thus characterizing a closed cycle. During circulation, the fluid undergoes variations of pressure and temperature which are responsible for changing the state of the fluid, which may be in gaseous or liquid state.

In a cooling circuit, the compressor act as the heart of the cooling system, creating the flow of the cooling fluid along the system components. The compressor raises the temperature of the cooling fluid by increasing the pressure provided on its inside and forces the circulation of this fluid in the circuit.

Therefore, the importance of a compressor in a cooling circuit is undeniable. There are various types of compressors applied in cooling systems, and in the field of the current invention, attention will be focused on linear compressors.

Due to the relative movement between the piston and the cylinder, the bearing formation of the piston is necessary. This bearing formation consists of the presence of a fluid in the gap between the external diameter of the piston and the internal diameter of the cylinder, preventing contact between them and the consequent premature wear and tear of the piston and/or cylinder. The presence of the fluid between the two components referred to also serves to decrease attrition between them, meaning the mechanical loss of the compressor is minor.

One of the forms of piston bearing formation is by way of aerostatic bearings which, in essence, consists of creating a gas cushion between the piston and the cylinder so as to avoid wear and tear between these two components. An example of this solution is revealed by documents US5,645,354 and US2010/247308 which disclose aerostatic bearings having a flow restrictor, wherein the flow restrictor is obtained through drilling of holes. One of the reasons for using this type of bearing formation is justified by the fact that the gas has a much lower viscosity attrition coefficient than oil, contributing such that the energy dissipated in the aerostatic bearing formation system is much lower than that of a lubrication with oil, whereby achieving improved yield of the compressor.

The gas compression mechanism operates by the axial and oscillatory movement of a piston inside a cylinder. At the top of the cylinder is the head, jointly with the piston and the cylinder forming a compression chamber. In the head, the discharge and suction valves are positioned. These valves regulate the inflow and outflow of gas in the cylinder. In turn, the piston is driven by an actuator which is connected to the linear motor of the compressor.

The piston of the compressor driven by the linear motor has the function of developing an alternative linear movement, meaning the movement of the piston inside the cylinder exerts a compression action on the gas let in by the suction valve, up to the point where it can be discharged to the high pressure side, through the discharge valve.

For the correct working of an aerostatic bearing formation, it is necessary to use a flow restrictor between a high pressure region which externally involves the cylinder and the gap between the piston and the cylinder. This restriction serves to control the pressure in the bearing formation region and to restrict the gas flow.

Among the various possible solutions, it is common to use the very gas of the cooling circuit for the aerostatic bearing formation of the piston. Therefore, all the gas used in the bearing formation represents a loss of efficiency of the compressor, since the gas is diverted from its original function, which is to generate cold in the evaporator of the cooling system. Accordingly, it is desirable that the gas flow of the bearing formation be as low as possible so as not to compromise the efficiency of the compressor.

In essence, restricting the gas flow is dependent on the length and size of the internal diameter of the restrictor. For a certain size, the bigger the cross section to the gas flow, that is, the bigger the internal diameter, the lower the restriction imposed on the gas flow. Based on these two variables (cross section to the flow and length) it is possible to obtain a loss of load necessary for any bearing restrictor of the compressor.

The microtubes available commercially on the market present very large tolerances in relation to the nominal internal diameter. One example of this can be found in patent US6,569,128. This document reveals a fluid delivery tube foreseen for medical purposes, which tube comprises a flow restrictor tube, but with very large tolerances. This variation of the internal diameter may cause a very large variation in the restriction on gas flow and, consequently, of the flow between one restrictor and the other. This type of occurrence causes an imbalance in the bearing, chiefly if this variation occurs between restrictors present in the same section of the cylinder.

Although a flow variation between restrictors in a same section is undesirable, there is a need for the restrictors present in the top region of the cylinder to have greater flows than the restrictors present in the lower part of the cylinder. This is because the piston suffers with the loss of support when it is in top dead center due to the high pressure existing in the compression chamber. Accordingly, there is a need to provide restrictors with different restrictions to the gas flow to these two regions of the cylinder.

In any case, a solution has not yet been found to guarantee the production of restrictors based on constant-flow microtubes. To-date, the characteristic evaluated in the productive process is the internal diameter value which, as already explained, due to the technologies applied in its production and existing respective tolerances, do not guarantee an equal flow between different restrictors.

Thus, there are currently no restrictors whose quality control is made by virtue of its restriction capacity, but rather on account of its dimensions. In other words, the present invention manages to achieve a production of restrictors that may differ from each other in terms of their dimensions, but that guarantee a same flow.

### Objectives of the Invention

It is, therefore, an objective of the present invention to provide restrictors for aerostatic bearings capable of guaranteeing a constant flow, regardless of its size and dimensional tolerance.

A further objective of the present invention is to provide restrictors for aerostatic bearings whose flow is adjusted by means of deformation of its internal section.

It is yet a further objective of the present invention to provide a process capable of guaranteeing the production of restrictors for aerostatic bearings with respect to guaranteeing desired flow values.

### Brief Description of the invention

The objectives of the present invention are achieved by providing a linear compressor comprising an aerostatic bearing forming a bearing between a piston and a cylinder, said aerostatic bearing having a flow restrictor, characterized by the fact that the restrictor is obtained through a deformation process of at least a portion of its inner section, the deformation being obtained by flattening or folding or blowing.

The objectives of the present invention are also achieved through a production process of a flow restrictor of a fluid for aerostatic bearings of linear compressors which comprises the stages of:
i)deforming the internal section of the restrictor in at least a portion of the restrictor;
ii) measuring the flow of a fluid in the restrictor;
iii) comparing the flow value of a fluid measured with the value previously specified;
iv) returning to stage i) if the flow value of the fluid is outside the specification.

### Brief Description of the Drawings

The present invention will now be described in greater detail based on examples represented in the drawings. The drawings show:
Figure 1 - is a cross-sectional view of a linear compressor.
Figure 2 - is a cross-sectional view of a restrictor of the state of the art.
Figure 3 a- is a cross-sectional view of restrictors of the present invention endowed with punctual constriction.

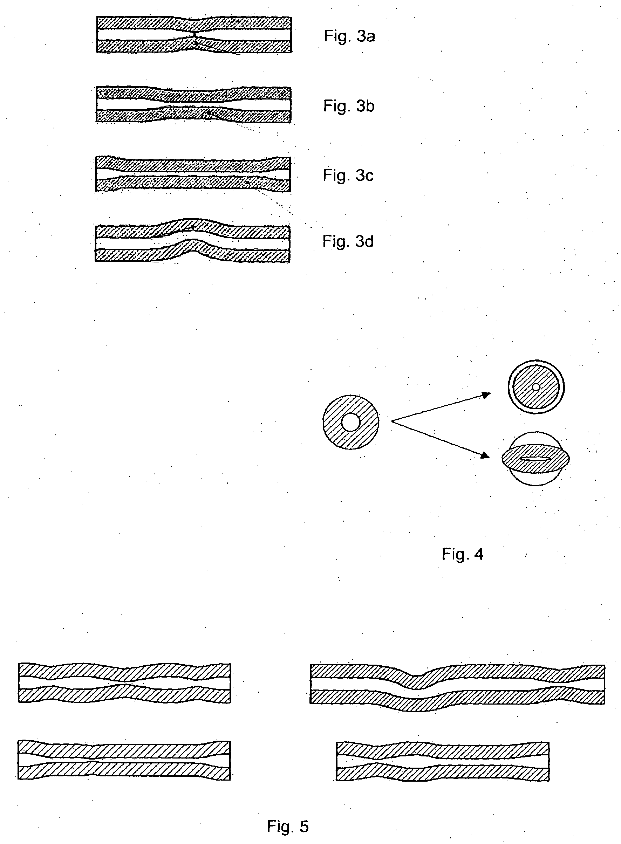

Figure 3 b- is a cross-sectional view of restrictors of the present invention endowed with partial constriction.
Figure 3 c- is a cross-sectional view of restrictors of the present invention endowed with total constriction.
Figure 3 d- is a cross-sectional view of restrictors of the present invention endowed with fold constriction.
Figure 4 - is a cross-sectional view of a constriction or kneading.
Figure 5 - is a cross-sectional view of restrictors of the present invention with combinations of types of kneading/constrictions and fold.

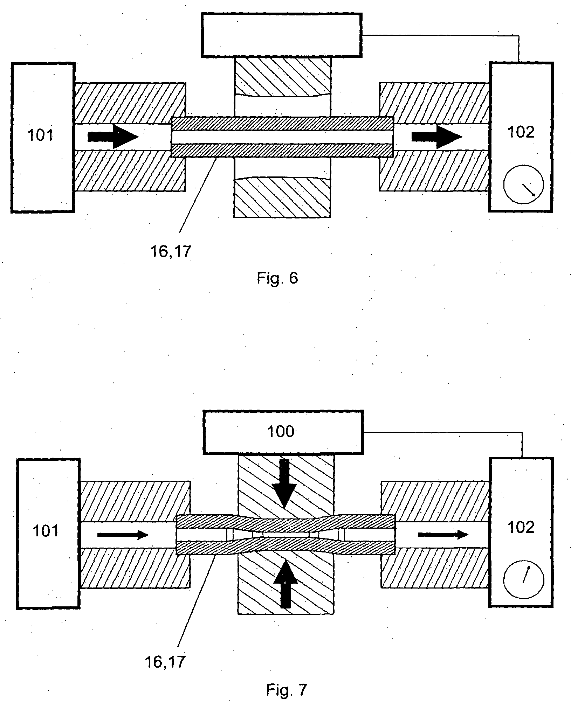

Figure 6 - is a view of an example of a system of regulating restrictors at rest.
Figure 7 - is a view of an example of a system of regulating restrictors at work.

### Detailed Description of the Drawings

The present invention proposes a technological advance both in the level of the restrictors (better known by persons skilled in the art as restrictor tubes/microtubes), as well as a productive process capable of producing the restrictors with the desired fluid flow characteristics.

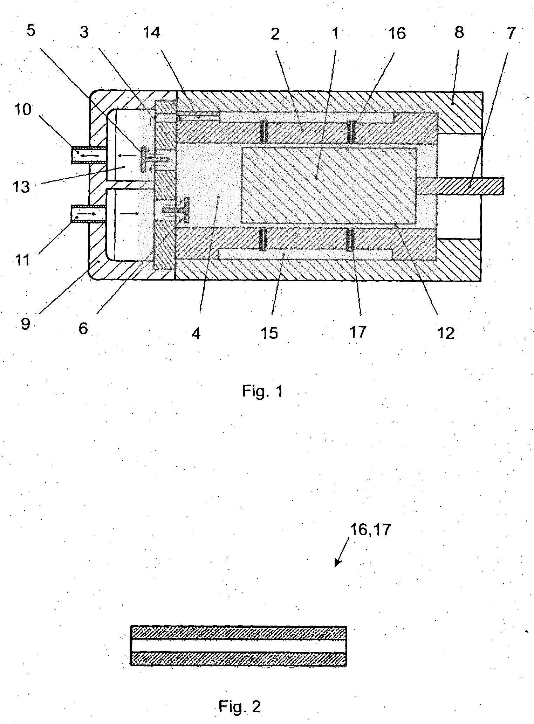

According to the principle of working of a cooling circuit and as presented in figure 1, preferably the gas compression mechanism occurs by the axial and oscillatory movement of a piston 1 inside a cylinder 2. At the top of the cylinder 2 is a head 3 which jointly with the piston 1 and the cylinder 2 form a compression chamber 4. In the head 3 there are positioned the discharge 5 and suction 6 valves which regulate the inflow and outflow of gas in the cylinder 2. It is also noted that the piston 1 is driven by an actuator 7 linked to the linear motor of the compressor. No further explanations are provided on this motor in this document.

The piston 1 of a compressor, when driven by the linear motor, has the function of developing an alternative linear movement, promoting a movement of the piston 1 inside the cylinder 2 which exerts compression action on the gas let in by the suction valve 6 up to the point where the gas can be discharged to the high pressure side, by way of the discharge valve 5.

The cylinder 2 is mounted inside a block 8 and on the head 3 there is mounted a lid 9 with the drain valve 10 and the suction valve 11, which connect the compressor to the rest of the system.

As referred to, the relative movement between piston 1 and cylinder 2, the bearing formation of the piston 1 is necessary, consisting of the presence of a fluid in the gap 12 between the two parts, with the purpose of separating them during movement.

An advantage of using the gas itself as lubricant fluid is the absence of an oil pumping system.

Preferably, the gas used for the bearing formation can be the gas itself pumped by the compressor and used in the cooling system. Once compressed, this gas is diverted from the discharge chamber 13, from the lid 9 through the channel 14 to the high pressure region 15 around the cylinder 2, and the high pressure region 15 is formed by the external diameter of the cylinder 2 and internal diameter of the block 8.

From the high pressure region 15 the gas passes through the restrictors 16,17 inserted in the wall of the cylinder 2, towards the gap 12 existing between the piston 1 and cylinder 2, forming a cushion of gas which prevents the contact between the piston 1 and cylinder 2.

As mentioned, with the aim of restricting the gas flow between the high pressure region 15 and the gap 12, it is necessary to make use of a restrictor 16,17. This restriction serves to control the pressure in the bearing formation region and to restrict the gas flow, since all the gas used in the bearing formation represents a loss of efficiency of the compressor, as the primary function of the gas is to be sent to the cooling system and to generate cold. Accordingly, it is worth emphasizing that the gas diverted to the bearing formation should be the minimum possible so as not to compromise the efficiency of the compressor.

To keep the balance of the piston 1 inside the cylinder 2, preferably at least three restrictors 16,17 are necessary in a given section of the cylinder 2 and at least two sections of restrictors 16,17 are necessary in the cylinder 2. The restrictors should be in such opposition that even with the oscillation movement of the piston 1 the restrictors 16,17 are never discovered, that is, that the piston 1 does not leave the actuation area of the restrictor 16,17.

With the aim of controlling the flow of the restrictors 16,17 and of guaranteeing that all the restrictors 16,17 of a same section of the cylinder 2 present the same gas flow, it is possible to start with restrictors having flows slightly above that specified, that is, with an internal section value higher than that specified, and measure the flow at the same time in which a constriction or kneading (plastic deformation) in generated in the restrictor 16,17 itself with the aim of decreasing the flow. Accordingly, it is possible to use tubes/microtubes, such as, for example, those used to manufacture hypodermic needles, for electroerosion tools, among others.

Once the specified flow is achieved, the plastic deformation ceases. Accordingly, the flow of each restrictor 16,17 is regulated, and may also, from a same restrictor 16,17, generate restrictors 16,17 with deliberately different flows when such need arises (such as, for example, in the top region of the cylinder 2).

It is thus possible to guarantee restrictors 16,17 with equal flows or with minimal differences by way of the principle of increasing the loss of load by decreasing the cross section area to the gas flow. This effect can be obtained by way of a constriction that decreases the internal diameter of the restrictor 16,17, or simply by kneading (see figure 3). In the case of kneading, although not resulting in a circular-shaped section, but rather flattened, an effect of increasing the loss of load is achieved, and consequent decrease of the flow (see figure 4). Other ways of decreasing the internal section area can also be used, such as a fold, for example.

Figure 3 illustrates some examples of how to apply the plastic deformation. This can be located in a single point of the restrictor (see figure 3a), as well as occupying a certain length of the restrictor (see figure 3b) or even be done along all or almost all the length of the restrictor (see figure 3c). Such as referred to, the formation of folds (see figure 3d) may also generate a restriction that decreases the gas flow.

The possibilities of this technology are varied, and the gas flow can be restricted by the most varied means, and the deformation imposed upon the material can be carried out, as shown in figure 5, in a punctual, partial, total manner, with folds, by flattening and by means of any combination thereof. In the case of partial deformation, there will be at least two different internal sections from each other for the passage of the fluid. Preferably, but not compulsorily, the material used is metallic and is of circular section before deformation. In any case, the material may present any section other than circular. These characteristics only depend on the specific needs of each project. Additionally, the material used may be polymer or glass-ceramics.

In order to achieve the desired flow value in each restrictor, a process capable of guaranteeing said specificity has been developed. With the aim of guaranteeing the maintenance of a suitable flow variation field between restrictors, the process of plastic deformation is preferably controlled by the very flow measured during the process.

This system may work in closed circuit such that once the specified flow is reached, the system automatically ceases the process of plastic deformation. Accordingly, it is well known that, regardless of the variation of the internal diameter of the restrictor 16,17, restrictors 16,17 are obtained with controlled flows, whose variations depend on the accuracy of the system that generates the plastic deformation, as well as the flow measurement system. An example of the process is shown in figures 6 and 7.

Figure 6 represents the initial stage of the process where the restrictor 16,17 is found, with its cross section unaltered, disposed in a system 100 capable of imposing a plastic deformation 100. To the left of the restrictor 16,17 is a source of gas under pressure. Notably, the system capable of imposing a plastic deformation 100 is controlled by the flow measurement system 102.

Figure 7 shows the working of the process at its deformation stage. The restrictor 16,17 undergoes a plastic deformation and the gas source under pressure 101, connected to the restrictor 16,17, sends a gas flow through the restrictor 16,17 which is connected to the flow measurement system 102 to take a reading of the flow value of the restrictor 16,17. This value will be compared to a value stipulated previously and, after comparing the results, if the flow value is above that stipulated, a signal is sent to the system that generates the plastic deformation 100 to proceed with the new plastic deformation. This process occurs successively and iteratively until the previously stipulated flow value is achieved. It is therefore guaranteed that said restrictor 16,17, when put to work, provides the necessary gas flow for the correct working of the system.

Since the deformation imposed upon the restrictor 16,17 may present an elastic component, causing the occurrence of an elastic return and which, consequently, the gas flow is above that desired, it is possible to carry out the process in more than just a single stage, making it iterative, that is, such that the system makes the chosen deformation and releases the restrictor 16,17 letting the deformed region return elastically, during a certain period of time suitable for it to return, then measuring the gas flow. If the flow is still not in accordance with specification, the system causes a new deformation in the restrictor 16,17 and then takes a fresh reading and so on and successively until the specified flow value is achieved.

This process can be carried out with both metal and polymer materials. Additionally and bearing in mind that the true objective is to guarantee a deformation of the internal section of the material, it is possible to employ a process of deformation by blowing capable of causing a controlled deformation of the restrictor 16,17.

Alternatively, it is also possible to use glass-ceramic materials, deformable by way of a process that feeds the restrictor with heat up to a softening point of the material (glass transition temperature - Tg) which enables its internal section to be molded to a desirable value.

Besides the techniques of plastic shaping by kneading, constriction, folding, blowing, it is also possible to use a technique of hydroforming or any other that is justifiable. It is further possible, by way of techniques such as hydroforming, to reverse in an absolutely controlled manner, excess deformation imposed upon the restrictor 16,17. This process of plastic shaping also allows the reverse situation to be carried out by deforming it beforehand from inside to out instead of by imposing compressing forces on the material.

Having described examples of preferred embodiments, it should be understood that the scope of the present invention is limited only by the content of the accompanying claims.

## Claims

1. Linear compressor comprising an aerostatic bearing forming a bearing between a piston and a cylinder, said aerostatic bearing having a flow restrictor, **characterized by** the fact that the restrictor (16,17) is obtained through a deformation process of at least a portion of its inner section, the deformation being obtained by flattening or folding or blowing.

2. Linear compressor comprising an aerostatic bearing forming a bearing between a piston and a cylinder according to claim 1, **characterized by** the fact that the deformation is punctual or partial or total.

3. Linear compressor comprising an aerostatic bearing forming a bearing between a piston and a cylinder according to claims 1 to 2, **characterized by** the fact that the deformation is simultaneously partial and punctual.

4. Linear compressor comprising an aerostatic bearing forming a bearing between a piston and a cylinder according to claims 1 to 3, **characterized by** the fact that the restrictor (16,17) is made of metallic material.

5. Linear compressor comprising an aerostatic bearing forming a bearing between a piston and a cylinder according to claims 1 to 4, **characterized by** the fact that the restrictor (16,17) is made of polymeric material.

6. Linear compressor comprising an aerostatic bearing forming a bearing between a piston and a cylinder according to claims 1 to 5, **characterized by** the fact that the restrictor (16,17) is made of glass-ceramic material.

7. Linear compressor comprising an aerostatic bearing forming a bearing between a piston and a cylinder according to claims 1 to 6, **characterized by** the fact that the restrictor (16,17) is a microtube.

8. A production process of a fluid flow restrictor (16,17) for aerostatic bearings of linear compressors **characterized by** the fact that it comprises stages of:
i) deforming the internal section of the restrictor (16,17) in at least a portion of the restrictor (16,17);
ii) measuring the flow of a fluid in the restrictor (16,17);
iii) comparing the flow value of a fluid measured with the value previously specified;
iv) returning to stage i) if the flow value of the fluid is outside specification.

9. A production process of a fluid flow restrictor (16,17) for aerostatic bearings of linear compressors according to claim 16, **characterized by** the fact that between stage i) and stage ii) there is an intermediary stage which provides for a waiting time for the elastic return of its deformed portion.

10. A production process of a fluid flow restrictor (16,17) for aerostatic bearings of linear compressors according to claim 16, **characterized by** the fact that in stage i) the deformation is carried out by any type of process of plastic shaping.

11. A production process of a fluid flow restrictor (16,17) for aerostatic bearings of linear compressors according to claim 16, **characterized by** the fact that in stage i) the deformation is carried out by flattening.

12. A production process of a fluid flow restrictor (16,17) for aerostatic bearings of linear compressors according to claim 16, **characterized by** the fact that in stage i) the deformation is carried out by folding.

13. A production process of a fluid flow restrictor (16,17) for aerostatic bearings of linear compressors according to claim 16, **characterized by** the fact that in stage i) the deformation is by blowing.

14. A production process of a fluid flow restrictor (16,17) for aerostatic bearings of linear compressors according to claim 16, **characterized by** the fact that in stage i) the deformation is total.

15. A production process of a fluid flow restrictor (16,17) for aerostatic bearings of linear compressors according to claim 16, **characterized by** the fact that in stage i) the deformation is partial.

16. A production process of a fluid flow restrictor (16,17) for aerostatic bearings of linear compressors according to claim 16, **characterized by** the fact that in stage i) the deformation is punctual.

17. A production process of a fluid flow restrictor (16,17) for aerostatic bearings of linear compressors according to claim 16, **characterized by** the fact that in stage i) the deformation is simultaneously partial and punctual.

18. A production process of a fluid flow restrictor (16,17) for aerostatic bearings of linear compressors according to claim 16, **characterized by** the fact that in stage i) the deformation is carried out by flattening.

19. A compressor **characterized by** the fact that it comprises a flow restrictor (16,17) obtained by the process defined in claims 8 to 18.

## Patentansprüche

1. Linearkompressor mit einem aerostatischen Lager, das ein Lager zwischen einem Kolben und einem Zylinder ausbildet, wobei das aerostatische Lager eine Durchflussdrossel aufweist, **gekennzeichnet durch** die Tatsache, dass die Drossel (16, 17) erlangt ist **durch** einen Deformationsprozess von mindestens einem Teil seines Innenabschnitts, wobei die Deformation erlangt wird **durch** Abflachen oder Falten oder Blasen.

2. Linearkompressor mit einem aerostatischen Lager, das ein Lager zwischen einem Kolben und einem Zylinder ausbildet, nach Anspruch 1, **gekennzeichnet durch** die Tatsache, dass die Deformation punktuell oder teilweise oder total ist.

3. Linearkompressor mit einem aerostatischen Lager, das ein Lager zwischen einem Kolben und einem Zylinder ausbildet nach Anspruch 1 oder 2, **gekennzeichnet durch** die Tatsache, dass die Deformation gleichzeitig teilweise und punktuell ist.

4. Linearkompressor mit einem aerostatischen Lager, das ein Lager zwischen einem Kolben und einem Zylinder ausbildet, nach einem der Ansprüche 1 bis 3, **gekennzeichnet durch** die Tatsache, dass die Drossel (16, 17) aus metallischem Material hergestellt ist.

5. Linearkompressor mit einem aerostatischen Lager, das ein Lager zwischen einem Kolben und einem Zylinder ausbildet, nach einem der Ansprüche 1 bis 4, **gekennzeichnet durch** die Tatsache, dass die Drossel (16, 17) aus Polymermaterial hergestellt ist.

6. Linearkompressor mit einem aerostatischen Lager, das ein Lager zwischen einem Kolben und einem Zylinder ausbildet, nach einem der Ansprüche 1 bis 5, **gekennzeichnet durch** die Tatsache, dass die Drossel (16, 17) aus einem glaskeramischen Material hergestellt ist.

7. Linearkompressor mit einem aerostatischen Lager, das ein Lager zwischen einem Kolben und einem Zylinder ausbildet, nach einem der Ansprüche 1 bis 6, **gekennzeichnet durch** die Tatsache, dass die Drossel (16, 17) ein Mikrorohr ist.

8. Produktionsprozess einer Fluiddurchflussdrossel (16, 17) für aerostatische Lager von Linearkompressoren, **gekennzeichnet durch** die Tatsache, dass es die folgenden Schritte aufweist:
i) Deformieren des Innenabschnitts der Drossel (16, 17) in mindestens einem Abschnitt der Drossel (16, 17);
ii) Messen des Durchflusses eines Fluids in der Drossel (16, 17);
iii) Vergleichen des gemessenen Durchflusswerts eines Fluids mit dem vorher spezifizierten Wert;
iv) Zurückkehren zu Schritt i), falls der Durchflusswert des Fluids außerhalb der Spezifikation ist.

9. Produktionsprozess für eine Fluiddurchflussdrossel (16, 17) für aerostatische Lager von Linearkompressoren nach Anspruch 16, **gekennzeichnet durch** die Tatsache, dass zwischen Schritt i) und Schritt ii) ein Zwischenschritt ist, der eine Wartezeit bereitstellt für das elastische Zurückkehren seines deformierten Abschnitts.

10. Produktionsprozess für eine Fluiddurchflussdrossel (16, 17) für aerostatische Lager von Linearkompressoren nach Anspruch 16, **gekennzeichnet durch** die Tatsache, dass in Schritt i) die Deformation **durch** jegliche Art von Prozess des Kunststoffformens ausgeführt wird.

11. Produktionsprozess für eine Fluiddurchflussdrossel (16, 17) für aerostatische Lager von Linearkompressoren nach Anspruch 16, **gekennzeichnet durch** die Tatsache, dass in Stufe i) die Deformation **durch** Abflachen ausgeführt wird.

12. Produktionsprozess für eine Fluiddurchflussdrossel (16, 17) für aerostatische Lager von Linearkompressoren nach Anspruch 16, **gekennzeichnet durch** die Tatsache, dass in Schritt i) die Deformation **durch** Falten ausgeführt wird.

13. Produktionsprozess für eine Fluiddurchflussdrossel (16, 17) für aerostatische Lager von Linearkompressoren nach Anspruch 16, **gekennzeichnet durch** die Tatsache, dass in Schritt i) die Deformation **durch** Blasen ist.

14. Produktionsprozess für eine Fluiddurchflussdrossel (16, 17) für aerostatische Lager von Linearkompressoren nach Anspruch 16, **gekennzeichnet durch** die Tatsache, dass in Schritt i) die Deformation total ist.

15. Produktionsprozess für eine Fluiddurchflussdrossel (16, 17) für aerostatische Lager von Linearkompressoren nach Anspruch 16, **gekennzeichnet durch** die Tatsache, dass in Schritt i) die Deformation teilweise ist.

16. Produktionsprozess für eine Fluiddurchflussdrossel (16, 17) für aerostatische Lager von Linearkompressoren nach Anspruch 16, **gekennzeichnet durch** die Tatsache, dass in Schritt i) die Deformation punktuell ist.

17. Produktionsprozess für eine Fluiddurchflussdrossel (16, 17) für aerostatische Lager von Linearkompressoren nach Anspruch 16, **gekennzeichnet durch** die Tatsache, dass in Schritt i) die Deformation gleichzeitig teilweise und punktuell ist.

18. Produktionsprozess für eine Fluiddurchflussdrossel (16, 17) für aerostatische Lager von Linearkompressoren nach Anspruch 16, **gekennzeichnet durch** die Tatsache, dass in Schritt i) die Deformation **durch** Abflachen ausgeführt wird.

19. Kompressor **gekennzeichnet durch** die Tatsache, dass er eine Durchflussdrossel (16, 17) aufweist, die **durch** den Prozess definiert in den Ansprüchen 8 bis 18 erhalten ist.

## Revendications

1. Compresseur linéaire comprenant un palier aérostatique formant un palier entre un piston et un cylindre, ledit palier aérostatique comportant un limiteur d'écoulement, **caractérisé par le fait que** le limiteur (16, 17) est obtenu par l'intermédiaire d'un procédé de déformation d'au moins une portion de sa section intérieure, la déformation étant obtenue par aplatissement ou pliage ou soufflage.

2. Compresseur linéaire comprenant un palier aérostatique formant un palier entre un piston et un cylindre selon la revendication 1, **caractérisé par le fait que** la déformation est ponctuelle ou partielle ou totale.

3. Compresseur linéaire comprenant un palier aérostatique formant un palier entre un piston et un cylindre selon les revendications 1 à 2, **caractérisé par le fait que** la déformation est simultanément partielle et ponctuelle.

4. Compresseur linéaire comprenant un palier aérostatique formant un palier entre un piston et un cylindre selon les revendications 1 à 3, **caractérisé par le fait que** le limiteur (16, 17) est fait de matériau métallique.

5. Compresseur linéaire comprenant un palier aérostatique formant un palier entre un piston et un cylindre selon les revendications 1 à 4, **caractérisé par le fait que** le limiteur (16, 17) est fait de matériau polymère.

6. Compresseur linéaire comprenant un palier aérostatique formant un palier entre un piston et un cylindre selon les revendications 1 à 5, **caractérisé par le fait que** le limiteur (16, 17) est fait de matériau vitrocéramique.

7. Compresseur linéaire comprenant un palier aérostatique formant un palier entre un piston et un cylindre selon les revendications 1 à 6, **caractérisé par le fait que** le limiteur (16, 17) est un microtube.

8. Procédé de production d'un limiteur d'écoulement fluidique (16, 17) pour des paliers aérostatiques de compresseurs linéaires, **caractérisé par le fait qu'**il comprend des étapes de :
i) déformation de la section interne du limiteur (16, 17) dans au moins une portion du limiteur (16, 17) ;
ii) mesure de l'écoulement d'un fluide dans le limiteur (16, 17) ;
iii) comparaison de la valeur d'écoulement d'un fluide mesuré à la valeur spécifiée auparavant ;
iv) retour à l'étape i) si la valeur d'écoulement du fluide est en dehors d'une spécification.

9. Procédé de production d'un limiteur d'écoulement fluidique (16, 17) pour des paliers aérostatiques de compresseurs linéaires selon la revendication 16, **caractérisé par le fait que**, entre l'étape i) et l'étape ii), il y a une étape intermédiaire qui permet un temps d'attente pour le retour élastique de sa portion déformée.

10. Procédé de production d'un limiteur d'écoulement fluidique (16, 17) pour des paliers aérostatiques de compresseurs linéaires selon la revendication 16, **caractérisé par le fait que**, dans l'étape i), la déformation est réalisée par un type quelconque de procédé de formage plastique.

11. Procédé de production d'un limiteur d'écoulement fluidique (16, 17) pour des paliers aérostatiques de compresseurs linéaires selon la revendication 16, **caractérisé par le fait que**, dans l'étape i), la déformation est réalisée par aplatissement.

12. Procédé de production d'un limiteur d'écoulement fluidique (16, 17) pour des paliers aérostatiques de compresseurs linéaires selon la revendication 16, **caractérisé par le fait que**, dans l'étape i), la déformation est réalisée par pliage.

13. Procédé de production d'un limiteur d'écoulement fluidique (16, 17) pour des paliers aérostatiques de compresseurs linéaires selon la revendication 16, **caractérisé par le fait que**, dans l'étape i), la déformation est par soufflage.

14. Procédé de production d'un limiteur d'écoulement fluidique (16, 17) pour des paliers aérostatiques de compresseurs linéaires selon la revendication 16, **caractérisé par le fait que**, dans l'étape i), la déformation est totale.

15. Procédé de production d'un limiteur d'écoulement fluidique (16, 17) pour des paliers aérostatiques de compresseurs linéaires selon la revendication 16, **caractérisé par le fait que**, dans l'étape i), la déformation est partielle.

16. Procédé de production d'un limiteur d'écoulement fluidique (16, 17) pour des paliers aérostatiques de compresseurs linéaires selon la revendication 16, **caractérisé par le fait que**, dans l'étape i), la déformation est ponctuelle.

17. Procédé de production d'un limiteur d'écoulement fluidique (16, 17) pour des paliers aérostatiques de compresseurs linéaires selon la revendication 16, **caractérisé par le fait que**, dans l'étape i), la déformation est simultanément partielles et ponctuelle.

18. Procédé de production d'un limiteur d'écoulement fluidique (16, 17) pour des paliers aérostatiques de compresseurs linéaires selon la revendication 16, **caractérisé par le fait que**, dans l'étape i), la déformation est réalisée par aplatissement.

19. Compresseur, **caractérisé par le fait qu'**il comprend un limiteur d'écoulement (16, 17) obtenu par le procédé selon les revendications 8 à 18.
